# FASCICULE DE BREVET EUROPEEN

(11) **EP 2 839 982 B1**
(45) Date de publication et mention de la délivrance du brevet: **22.06.2016**
(21) Numéro de dépôt: 14178492.6
(22) Date de dépôt: 25.07.2014
(51) Int. Cl.: B60L 5/24

(54) **Pantographe pour véhicule ferroviaire comportant des moyens de dégivrage et procédé de dégivrage d'un pantographe**
Pantograf für Schienenfahrzeug, der Enteisungsmittel umfasst, und Enteisungsverfahren eines Pantografen
Pantograph for railway vehicle comprising deicing means and method for deicing a pantograph

(30) Priorité: 21.08.2013 FR 1358098
(43) Date de publication de la demande: 25.02.2015
(73) Titulaire: SNCF Mobilités, 93200 Saint-Denis (FR)
(72) Inventeur: Goeres, David, 72000 Le Mans (FR)
(74) Mandataire: Argyma

(56) Documents cités:
- WO-A1-93/23909
- FR-A1- 2 974 335
- GB-A- 1 240 690

## Description

### DOMAINE TECHNIQUE GENERAL ET ART ANTERIEUR

La présente invention concerne le domaine des véhicules ferroviaires tels que les trains ou les tramways et, plus particulièrement, l'alimentation électrique de tels véhicules ferroviaires. De manière ordinaire, un véhicule ferroviaire comporte un pantographe adapté pour capter un courant d'alimentation circulant dans une caténaire disposée en hauteur au-dessus d'une voie ferroviaire sur laquelle circule ledit véhicule ferroviaire.

De manière connue, une caténaire comprend un câble porteur horizontal sur lequel est suspendu horizontalement un fil de contact dans lequel circule un courant électrique. Après captage par le véhicule ferroviaire, le courant électrique est conduit par les rails de la voie ferroviaire vers des équipements au sol. Par la suite, le circuit de circulation du courant est désigné « circuit de voie ».

De manière connue, en particulier par la demande de brevet FR2974335 de la SOCIETE NATIONALE DES CHEMINS DE FER SNCF, un pantographe de véhicule ferroviaire selon le préambule de la revendication 1 comporte une partie inférieure, connue de l'homme du métier sous la désignation de grand cadre, dont la base est reliée au toit du véhicule ferroviaire et une partie supérieure, connue de l'homme du métier sous la désignation d'archet, qui est montée sur la tête du cadre et qui est destinée à venir en contact avec la caténaire.

Le pantographe comporte de manière classique une suspension pneumatique permettant le dépliement et le repliement du cadre sur le toit du véhicule ferroviaire. Ainsi, le pantographe peut se lever ou descendre en fonction des besoins.

L'archet comporte une ou plusieurs bandes de frottement destinées à entrer en contact avec le fil de contact. Chaque bande de frottement est réalisée dans un matériau conducteur de courant.

En période hivernale, en raison du givre ou des pluies de verglas, une enveloppe de glace se forme sur la caténaire et sur les bandes de frottement de l'archet.

Lors de la mise en service du véhicule ferroviaire, le conducteur lève le pantographe pour mettre en contact les bandes de frottement avec la caténaire afin d'alimenter le véhicule ferroviaire. L'enveloppe de glace, formée sur les bandes de frottements et la caténaire, dégrade la liaison électrique, voire l'empêche dans des situations extrêmes. Il en résulte que le captage électrique est de mauvaise qualité.

En pratique, l'enveloppe de glace empêche le contact physique entre les bandes de frottements et la caténaire qui demeurent écartées. Aussi, un arc électrique se crée entre les bandes de frottements et la caténaire pour établir la liaison électrique.

Tant que l'enveloppe de glace n'est pas fondue, l'arc électrique demeure entre les bandes de frottements et la caténaire. Du fait de la présence de l'arc électrique, le courant et la tension sont fortement déformés dans le circuit de voie. Il en résulte que les normes électriques des différents circuits de voie (par exemple, les circuits de voie 100Hz en Allemagne ou 50Hz en Belgique) ne sont plus respectées. En outre, les bandes de frottement de la caténaire sont également dégradées par l'arc électrique.

Il a été présenté dans l'art antérieur plusieurs solutions pour éliminer l'enveloppe de glace recouvrant les bandes de frottement d'un pantographe.

Une première solution connue consiste à déplacer le pantographe de manière répétée entre sa position basse et sa position haute de contact avec la caténaire afin que les chocs répétés entre le pantographe et la caténaire puissent briser l'enveloppe de glace formée sur les bandes de frottement. En pratique, cette méthode ne permet d'éliminer l'enveloppe de glace que sur une zone très réduite des bandes de frottement. Aussi, au cours du déplacement du véhicule ferroviaire, un arc électrique peut être généré si la caténaire entre en contact avec une zone non dégivrée des bandes de frottement. Une telle solution n'est donc pas satisfaisante.

Une deuxième solution connue pour pallier ce problème consiste à laisser les véhicules ferroviaires en permanence sous tension électrique, c'est-à-dire en maintien de service, afin de conserver un courant dans la caténaire et les bandes de frottement du pantographe. La chaleur générée par effet Joule dans ces composants - du fait de leur résistance électrique intrinsèque - permet d'éviter la formation d'une enveloppe de glace. Cette dernière solution présente l'inconvénient d'être énergivore et donc coûteuse puisqu'elle contraint d'alimenter les véhicules ferroviaires lorsque ceux-ci sont en stationnement.

Une troisième solution consiste à utiliser un système de chauffage, dit « par traçage », des bandes de frottement du pantographe. En pratique, un fil électrique résistif est placé dans la bande de frottement puis le fil électrique résistif est alimenté de manière à générer de la chaleur par effet Joule et faire fondre l'enveloppe de glace recouvrant la bande de frottement. Autrement dit, le système de chauffage est intégré dans la bande de frottement.

Un chauffage par traçage présente l'inconvénient d'être complexe et coûteux à mettre en oeuvre. En pratique, le fil résistif est alimenté par un convertisseur électrique du véhicule ferroviaire tandis que la bande de frottement est en contact électrique avec la caténaire. Autrement dit, le fil résistif et la bande de frottement ne sont pas au même potentiel électrique et il est nécessaire d'isoler électriquement le fil résistif afin d'éviter l'apparition d'arcs électriques. A cet effet, le fil résistif comporte une gaine isolante qui pénalise sa section, son volume et par conséquent son poids. L'intégration d'un système de chauffage par traçage dans une bande de frottement pénalise le poids de la bande de frottement, ce qui dégrade les performances de captage du pantographe à haute vitesse.

Par ailleurs, l'intégration d'un système de chauffage par traçage dans une bande de frottement augmente son coût de fabrication. Cet inconvénient est d'autant plus préjudiciable que les bandes de frottement sont des éléments « consommables » qui sont remplacés plusieurs fois par an. Aussi, l'utilisation d'un système de chauffage par traçage présente un coût de maintenance important.

L'invention a donc pour but de remédier à ces inconvénients en proposant un pantographe apte à éliminer efficacement une enveloppe de glace formée sur ses bandes de frottement tout en possédant des performances de captage de courant optimales et un coût de maintenance réduit.

### PRESENTATION GENERALE DE L'INVENTION

A cet effet, l'invention concerne un pantographe comportant un cadre, destiné à être monté sur un véhicule ferroviaire, et un archet, monté sur ledit cadre, comportant au moins un dispositif de support dans lequel est montée au moins une bande de frottement adaptée pour capter un courant d'alimentation d'une ligne caténaire.

L'invention est remarquable en ce que le dispositif de support comporte au moins un élément magnétique et en ce que le pantographe comporte des moyens de génération d'au moins un champ magnétique adapté pour générer des courants de Foucault dans ledit élément magnétique afin de dégivrer la bande de frottement.

De manière avantageuse, la bande de frottement est chauffée de manière indirecte via son dispositif de support. Autrement dit, le pantographe selon l'invention ne nécessite pas de recourir à une bande de frottement spécifique, ce qui diminue les coûts de maintenance. De manière avantageuse, le pantographe et ses éléments (archet, cadre) ne sont pas modifiés par comparaison à l'art antérieur. Aussi, il suffit d'équiper des pantographes existants avec des moyens de génération d'un champ magnétique pour permettre un dégivrage.

En outre, le chauffage de l'élément magnétique par induction, c'est-à-dire, sans liaison électrique directe, permet d'éviter tout risque de formation d'un arc électrique, ce qui améliore la sécurité et la durée de vie du pantographe. De plus, l'archet possède un poids similaire à un archet d'un pantographe selon l'art antérieur. Les performances de captage du pantographe à haute vitesse ne sont donc pas affectées.

Enfin, un chauffage par induction permet une montée en température rapide ce qui favorise la fonte du givre et la séparation de l'enveloppe de givre de la bande de frottement.

Selon un aspect de l'invention, le dispositif de support est constitué par ledit élément magnétique. Autrement dit, le dispositif de support et l'élément magnétique se confondent pour former un même ensemble. Ainsi, de manière avantageuse, un dispositif de support métallique est chauffé par induction pour dégivrer une bande de frottement. Le dispositif de support possède ainsi, une première fonction de support et une deuxième fonction de génération de chaleur.

Selon un autre aspect de l'invention, ledit dispositif de support comporte un élément de support amagnétique d'une bande de frottement et un élément magnétique fixé audit élément de support. Par matériau amagnétique, il faut entendre tout matériau non-ferromagnétique, par exemple paramagnétique ou diamagnétique. Un élément de support en matériau amagnétique, par exemple en aluminium, possède un poids réduit, ce qui améliore les performances de captage de l'archet à haute vitesse. L'intégration d'un élément magnétique dans le dispositif de support permet à ce dernier d'être chauffé par l'élément magnétique. La chaleur reçue par le dispositif de support est ensuite transmise à la bande de frottement par conduction thermique afin de la dégivrer. Un tel dispositif de support possède ainsi les avantages d'un matériau amagnétique tout en permettant un dégivrage de la bande de frottement.

Selon un premier aspect, ledit élément de support est disposé entre l'élément magnétique et la bande de frottement, l'élément de support remplissant une fonction d'interface de conduction thermique.

De manière préférée, l'élément magnétique se présente sous la forme d'une plaque plane.

Selon un deuxième aspect, l'élément magnétique est monté dans ledit élément de support afin de chauffer ledit dispositif de support de manière interne.

De manière préférée, ladite bande de frottement est soudée audit dispositif de support afin d'assurer un couplage thermique optimal.

De manière avantageuse, les moyens de génération d'au moins un champ magnétique comportent au moins un module d'alimentation et au moins un module bobiné. De préférence, le module d'alimentation est adapté pour fournir un courant alternatif au module bobiné.

De préférence, les moyens de génération d'au moins un champ magnétique comportent un transformateur d'isolation monté électriquement entre le module d'alimentation et le module bobiné. Ainsi, le module bobiné est avantageusement découpler électriquement du module d'alimentation, ce qui améliore la sécurité.

De préférence encore, le module bobiné est monté sur l'archet du pantographe de manière à permettre le dégivrage de la bande de frottement pour toute position du pantographe (position levée ou descendue). Une telle architecture est en outre avantageuse car elle permet de limiter l'encombrement sur le toit du véhicule ferroviaire.

De préférence toujours, le module bobiné est relié électriquement au pantographe et à un module d'alimentation ou à un transformateur d'isolation du véhicule ferroviaire. Avantageusement, un fil électrique de poids réduit peut être utilisé étant donné qu'il n'est pas nécessaire d'isoler le fil électrique du pantographe lorsqu'un transformateur d'isolation est utilisé.

De manière préférée, les moyens de génération d'au moins un champ magnétique comportent une pluralité de modules bobinés reliés à un unique module d'alimentation.

De préférence, lesdits modules bobinés sont adaptés pour générer une pluralité de champs magnétiques afin de chauffer une même bande de frottement et ainsi dégivrer de manière optimale chaque zone de la bande de frottement. De préférence, lesdits modules bobinés sont adaptés pour générer une pluralité de champs magnétiques afin de chauffer une pluralité de bandes de frottement. Ainsi, une pluralité de bandes de frottement du pantographe peut être dégivrée de manière concomitante.

Selon un aspect de l'invention, le pantographe comportant au moins un dispositif d'isolation adapté pour être fixé à un véhicule ferroviaire, le transformateur d'isolation est monté dans ledit dispositif d'isolation. Ainsi, le module bobiné est découplé électriquement du véhicule ferroviaire. Une telle disposition est particulièrement avantageuse lorsque le module bobiné est monté sur l'archet du pantographe.

L'invention concerne également un véhicule ferroviaire comportant un toit sur lequel est monté un pantographe tel que décrit précédemment.

L'invention concerne en outre un procédé de dégivrage d'un pantographe comportant un cadre monté à un véhicule ferroviaire et un archet, monté sur ledit cadre, comportant au moins un dispositif de support dans lequel est montée au moins une bande de frottement adaptée pour capter un courant d'alimentation d'une ligne caténaire, le dispositif de support comportant au moins un élément magnétique, le procédé comportant une étape de génération d'au moins un champ magnétique afin de générer des courants de Foucault dans ledit élément magnétique pour dégivrer la bande de frottement.

De préférence, le procédé de dégivrage est mis en oeuvre avant la montée du pantographe pour capter le courant d'alimentation de la caténaire. Un tel procédé est mis en oeuvre de manière préliminaire à la conduite, ce qui limite la consommation d'énergie du véhicule et permet des conditions de captage optimales lors de la conduite.

### PRESENTATION DES FIGURES

L'invention sera mieux comprise à la lecture de la description qui va suivre, donnée uniquement à titre d'exemple, et se référant aux dessins annexés sur lesquels :
- la figure 1 est une représentation schématique d'un véhicule ferroviaire selon une forme de réalisation de l'invention dont le pantographe est en contact avec une caténaire ;
- la figure 2 est une représentation schématique en coupe transversale d'un véhicule avec son pantographe selon une forme de réalisation de l'invention ;
- la figure 3 est une représentation schématique en coupe transversale d'un pantographe avec ses moyens de génération d'un champ magnétique ;
- la figure 4 est une représentation schématique en coupe transversale d'un pantographe selon la figure 3 avec un transformateur d'isolation ;
- la figure 5 est une représentation schématique en coupe transversale d'un pantographe avec un élément magnétique rapporté ;
- la figure 6 est une représentation schématique en coupe longitudinale d'un dispositif de support de bande de frottement d'un pantographe avec un élément magnétique intégré ;
- la figure 7 est une représentation schématique en coupe longitudinale d'un pantographe comportant deux modules bobinés pour dégivrer deux bandes de frottement ;
- la figure 8 est une représentation schématique en coupe transversale d'un pantographe comportant deux modules bobinés pour dégivrer une bande de frottement ; et
- la figure 9 est une représentation schématique en coupe longitudinale d'un véhicule avec un pantographe comportant un module bobiné fixé à son archet.

### DESCRIPTION D'UN OU PLUSIEURS MODES DE REALISATION ET DE MISE EN OEUVRE

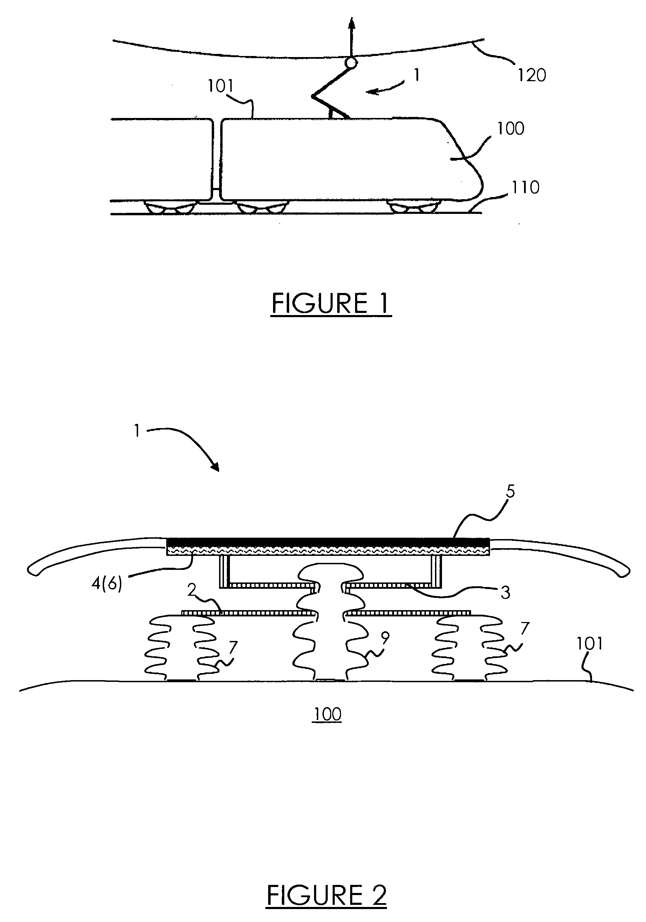

En référence à la figure 1, il est représenté un véhicule ferroviaire 100 circulant sur une voie ferroviaire 110 au-dessus de laquelle s'étend une caténaire 120 dans laquelle circule un courant électrique d'alimentation. Le véhicule ferroviaire 100 comporte un toit 101 sur lequel est monté un pantographe 1 selon l'invention pour capter le courant d'alimentation de la caténaire 120.

En référence à la figure 2, il est représenté une vue schématique en coupe du pantographe 1 de la figure 1. De manière connue, le pantographe 1 comporte un cadre 2, monté sur le toit 101 du véhicule ferroviaire 100, et un archet 3 relié audit cadre 2. De manière connue, le pantographe 1 comporte une suspension (non représentée) pour lever ou descendre le cadre 2.

L'archet 3 comporte dans cet exemple un dispositif de support 4 dans lequel est montée une bande de frottement 5 adaptée pour capter le courant d'alimentation de la ligne caténaire 120. Afin d'isoler électriquement le pantographe 1 du toit 101 du véhicule ferroviaire 100, ce dernier est équipé d'une pluralité de dispositifs d'isolation 7 pour permettre la fixation du pantographe 1. Autrement dit, les dispositifs d'isolation 7 forment une interface isolante entre le pantographe 1 et le toit 101 du véhicule ferroviaire 100. De manière connue, les dispositifs d'isolation 7 sont réalisés en matériaux céramiques ou composites.

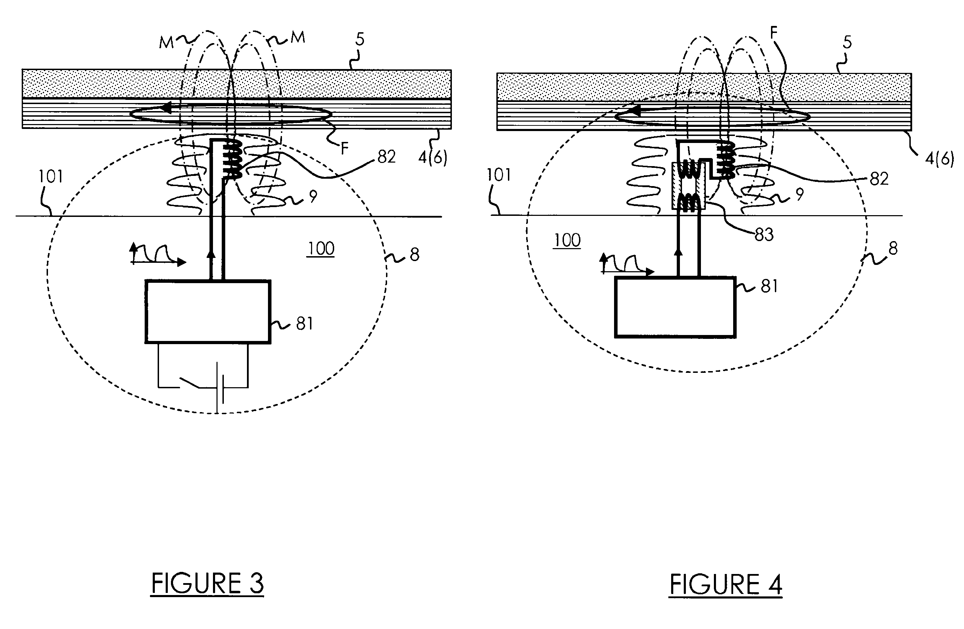

En référence à la figure 3, le dispositif de support 4 comporte au moins un élément magnétique 6, de préférence, en matériau métallique. Selon l'invention, le pantographe 1 comporte des moyens de génération 8 d'un champ magnétique M adapté pour générer des courants de Foucault F dans ledit élément magnétique 6 afin de chauffer la bande de frottement 5.

Dans cet exemple de réalisation de la figure 3, le dispositif de support 4 est réalisé en matériau magnétique, en particulier, en acier. Autrement dit, le dispositif de support 4 et l'élément magnétique 6 se confondent. Un tel dispositif de support 4 est avantageux car il permet de s'échauffer directement par induction magnétique. Du fait de la résistance électrique du dispositif de support 4, les courants de Foucault F échauffent le dispositif de support 4 par effet Joule.

Comme la bande de frottement 5 est montée dans le dispositif de support 4, la chaleur générée par le dispositif de support 4 est communiquée à la bande de frottement 5 par conduction thermique. De préférence, la bande de frottement 5 est soudée au dispositif de support 4 afin de permettre un couplage thermique optimal.

Toujours en référence à la figure 3, les moyens de génération 8 d'un champ magnétique M comportent un module bobiné 82 pour générer ledit champ magnétique M et un module d'alimentation 81 dudit module bobiné 82.

Le module bobiné 82 comporte, de préférence, une pluralité de spires jointives adaptés pour générer un champ magnétique en fonction du courant circulant dans lesdites spires. De manière connue, les caractéristiques du champ magnétique M sont fonction des dimensions et du nombre de spires du module bobiné 82.

Le module d'alimentation 81 se présente, dans cet exemple, sous la forme d'un convertisseur de tension du type hacheur afin de fournir un courant alternatif au module bobiné 82. Le module d'alimentation 81 est lui-même alimenté par une batterie du véhicule ferroviaire. A titre d'exemple, le module d'alimentation 81 découpe la tension de batterie de 72V à une fréquence de découpage de 50 kHz. De manière alternative, le module d'alimentation 81 se présente sous la forme d'un onduleur.

De préférence, en référence à la figure 3, le module d'alimentation 81 est monté dans le toit 101 du véhicule ferroviaire 100 tandis que le module bobiné 82 est monté dans un boîtier de dégivrage 9 fixé sur le toit 101 du véhicule ferroviaire 100 comme illustré aux figures 2 à 4. De manière préférée, le boîtier de dégivrage 9 est réalisé en matériau isolant. De manière avantageuse, toute interaction électrique entre le circuit électrique du module bobiné 82 et le circuit électrique du pantographe 1 est évitée.

Dans cet exemple, la quantité de chaleur générée par effet Joule est fonction de la résistance électrique de l'élément magnétique 6 du dispositif de support 4 et de l'amplitude des courants de Foucault F. De manière connue, l'amplitude des courants de Foucault F est fonction de l'amplitude du champ magnétique M qui dépend directement de la distance entre le dispositif de support 4 et le module bobiné 82.

En minimisant la distance entre l'élément magnétique 6, ici le dispositif de support 4, et le module bobiné 82, on augmente la quantité de chaleur générée dans le dispositif de support 4. Cette distance doit être la plus faible possible tout en garantissant une isolation électrique vis-à-vis de la tension d'alimentation de la caténaire 120. Aussi, le module bobiné 82 est placé dans un boîtier de dégivrage 9 le plus proche du dispositif de support 4 lorsque le pantographe 1 est baissé.

En référence à la figure 4, afin de renforcer l'isolation électrique, les moyens de génération 8 comportent un transformateur d'isolation 83 monté électriquement entre le module d'alimentation 81 et le module bobiné 82. De manière avantageuse, un tel transformateur d'isolation 83 permet de découpler électriquement le module d'alimentation 81 du module bobiné 82. Ainsi, le module bobiné 82 peut être placé à proximité du dispositif de support 4 afin d'augmenter le rendement de génération de chaleur par effet Joule.

De préférence, le transformateur d'isolation 83 est monté dans un boîtier de dégivrage 9 comme illustré à la figure 4. De manière préférée, le transformateur d'isolation 83 est isolé de manière galvanique.

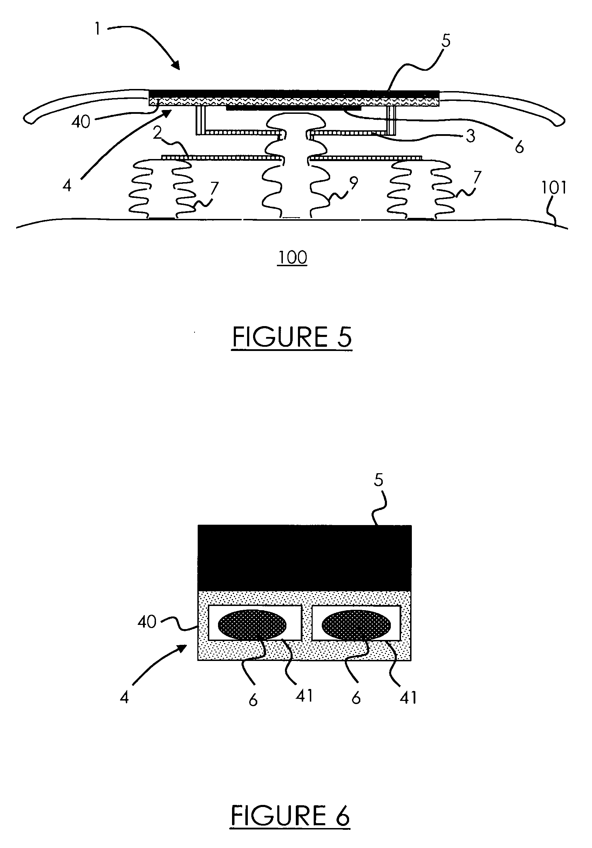

De manière alternative, le dispositif de support 4 peut être hybride et comprendre un élément de support 40 d'une bande de frottement 5 réalisé en matériau amagnétique et associé à un élément magnétique 6 comme illustré aux figures 5 et 6. Un tel élément de support 40 en matériau amagnétique, par exemple en aluminium, possède un poids limité, ce qui améliore le comportement de l'archet 3 lors du captage à haute vitesse.

Selon une première forme de réalisation, en référence à la figure 5, un élément magnétique 6, de préférence en acier, est fixé sous un élément de support 40 de manière à ce que l'élément de support 40 soit situé entre la bande de frottement 5 et l'élément magnétique 6. Ainsi, les moyens de génération 8 d'un champ magnétique M permettent de chauffer par induction l'élément magnétique 6 qui chauffe par conduction thermique l'élément de support 40 amagnétique qui chauffe lui-même par conduction thermique la bande de frottement 5. Il va de soi que l'élément magnétique 6 pourrait également être situé entre l'élément de support 40 et la bande de frottement 5.

De manière préférée, l'élément magnétique 6 se présente sous la forme d'une plaque plane de manière à augmenter la surface de chauffe de l'élément de support 40 et ainsi favoriser la conduction thermique.

Selon une deuxième forme de réalisation, en référence à la figure 6, l'élément de support 40 comporte une pluralité de logements 41 comportant chacun un élément magnétique 6. De manière préférée, l'élément de support 40 est un profilé qui comporte, par nature, des logements longitudinaux 41. L'introduction d'éléments magnétiques 6 ne nécessite ainsi aucun usinage spécifique de l'élément de support 40.

De manière avantageuse, l'élément de support 40 intègre les éléments magnétiques 6 afin que ces derniers chauffent l'élément de support 40 amagnétique par conduction thermique, la bande de frottement 5 étant ensuite chauffée par conduction thermique par l'élément de support 40. En référence à la figure 6, il a été présenté des éléments magnétiques 6 longitudinaux de section ovale mais il va de soi que la section des éléments magnétiques 6 pourrait être diverse.

De manière avantageuse, l'utilisation d'un dispositif de support 4 hybride en matériau magnétique et amagnétique n'impose pas de modifier les moyens de génération 8 d'un champ magnétique présentés précédemment pour un dispositif de support 4 en matériau magnétique.

Il a été présenté précédemment un unique module bobiné 82 pour chauffer une unique bande de frottement 5. Néanmoins, le nombre de modules bobinés 82 peut être adapté pour répondre aux besoins en chauffage du pantographe 1.

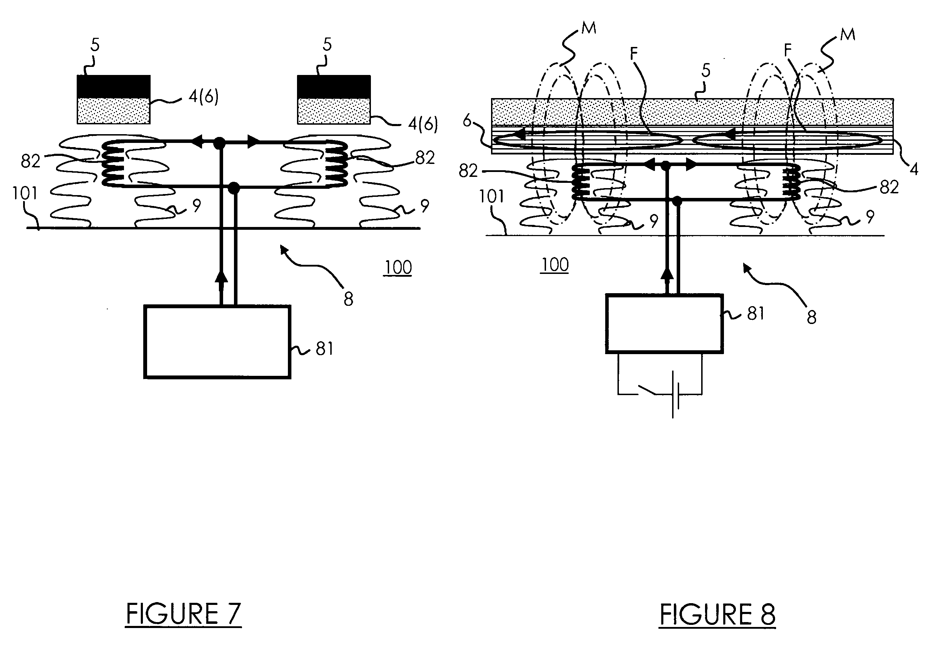

En référence à la figure 7, selon une forme de réalisation de l'invention, les moyens de génération 8 d'un champ magnétique M comportent deux modules bobinés 82 pour chauffer respectivement deux bandes de frottement 5 du pantographe 1. De manière avantageuse, toutes les bandes de frottement 5 d'un pantographe 1 peuvent être ainsi chauffées pour éviter la formation d'une enveloppe de glace.

En référence à la figure 8, selon une autre forme de réalisation de l'invention, les moyens de génération 8 d'un champ magnétique M comportent deux modules bobinés 82 pour chauffer une même bande de frottement 5 du pantographe 1. De manière avantageuse, cela permet un chauffage homogène de ladite bande de frottement 5 sur toute sa longueur.

De préférence, comme illustré aux figures 7 et 8, lorsque les moyens de génération 8 d'un champ magnétique M comportent plusieurs modules bobinés 82, ces derniers sont reliés à un même module d'alimentation 81 afin de limiter l'encombrement et le coût des moyens de génération 8. De manière préférée, les modules bobinés 82 sont montés dans des boîtiers de dégivrage 9 distincts comme illustré aux figures 7 et 8.

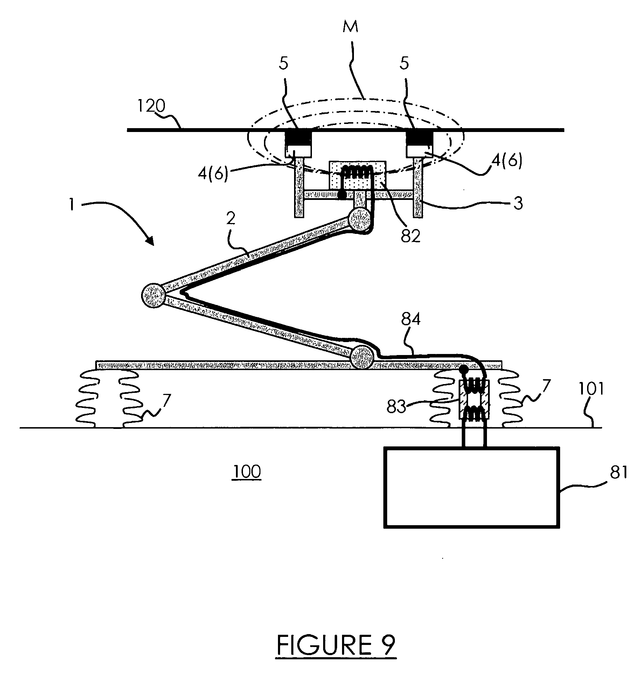

En référence à la figure 9, il est représenté un pantographe 1 comportant un cadre 2 relié à un archet 3 comprenant deux dispositifs de support 4 supportant chacun une bande de frottement 5. Le pantographe 1 est fixé au toit 101 d'un véhicule ferroviaire 100 par l'intermédiaire de plusieurs dispositifs d'isolation 7.

Dans cette forme de réalisation, de manière similaire à la forme de réalisation de la figure 4, les moyens de génération 8 comportent un transformateur d'isolation 83 monté électriquement entre le module d'alimentation 81 et le module bobiné 82. En référence à la figure 9, le module bobiné 82 est avantageusement monté sur l'archet 3 du pantographe 1 de manière à demeurer à proximité des bandes de frottement 5 et ainsi permettre leur chauffage via les éléments magnétiques 6 des dispositifs de support 4 pour toute position du pantographe 1. Autrement dit, les bandes de frottement 5 sont chauffées lorsque le pantographe 1 est monté ou descendu.

Dans cet exemple, le module bobiné 82 est relié électriquement, d'une part, au pantographe 1, de préférence à l'archet 3, et, d'autre part, au transformateur d'isolation 83 qui est monté dans un dispositif d'isolation 7 du toit 101 du véhicule ferroviaire 100. Toujours en référence à la figure 9, le module bobiné 82 est relié par une liaison électrique au transformateur d'isolation 83. De préférence, la liaison électrique se présente sous la forme d'un fil électrique 84 courant le long du pantographe 1. Comme le module bobiné 82 est relié électriquement au pantographe 1, il n'est pas nécessaire de recourir à un fil électrique 84 ayant une forte isolation. De manière avantageuse, un fil électrique 84 de faible diamètre et de poids réduit peut être utilisé.

Un tel transformateur d'isolation 83 permet avantageusement de dissocier le circuit électrique du module bobiné 82 du module d'alimentation 81. A cet effet, le transformateur d'isolation 83 comporte une première borne reliée au fil électrique 84 et une deuxième borne reliée électriquement au pantographe 1, de préférence, au cadre 2. Une telle architecture est avantageuse car elle permet de limiter l'encombrement sur le toit 101 du véhicule ferroviaire 100.

Il va de soi qu'un véhicule ferroviaire 100 peut comprendre une pluralité de pantographes 1 équipés chacun d'un ou plusieurs modules bobinés 82 afin de dégivrer leurs bandes de frottement 5.

Un exemple de mise en oeuvre de l'invention va être maintenant présenté en référence à la figure 3.

Quelques minutes avant le début de la conduite, le conducteur du véhicule ferroviaire 100 observe la présence d'une enveloppe de glace formée par le givre au niveau des bandes de frottement 5 du pantographe 1. Pour l'éliminer, ce dernier active le module d'alimentation 81 qui fournit un courant alternatif au module bobiné 82, situé à proximité de la bande de frottement 5, lorsque le pantographe 1 est en position descendue.

Lorsque le courant alternatif circule dans les spires du module bobiné 82, un champ magnétique M est généré dans le dispositif de support 4 de la bande de frottement 5. Dans cet exemple, le dispositif de support 4 étant magnétique, les électrons du dispositif de support 4 sont déplacés par le champ magnétique M, ce qui engendre des courants de Foucault F dans le dispositif de support 4. Du fait de sa résistance électrique interne, les courants de Foucault génèrent de la chaleur par effet Joule dans le dispositif de support 4 qui est transmise à la bande de frottement 5 par conduction thermique. Ainsi, la bande de frottement 5 s'échauffe et fait fondre l'enveloppe de glace formée par le givre.

Le conducteur peut ensuite relever le pantographe 1 afin que ce dernier vienne en contact avec la caténaire 120 pour alimenter le véhicule ferroviaire 100. L'enveloppe de glace ayant été éliminée, le captage du courant d'alimentation de la caténaire 120 est réalisé dans des conditions optimales. De préférence, le module d'alimentation 81 est désactivé préalablement à la montée du pantographe 100.

Grâce à l'invention, le dégivrage du pantographe 1 est rapide, efficace et permet un captage optimal du courant de la caténaire 120. En outre, les coûts de maintenance sont avantageusement réduits.

## Revendications

1. Pantographe (1) comportant un cadre (2), destiné à être monté à un véhicule ferroviaire (10), et un archet (3), monté sur ledit cadre (2), comportant au moins un dispositif de support (4) dans lequel est montée au moins une bande de frottement (5) adaptée pour capter un courant d'alimentation d'une ligne caténaire, pantographe **caractérisé par le fait que** ledit dispositif de support (4) comporte au moins un élément magnétique (6) et **par le fait que** le pantographe (1) comporte des moyens de génération (8) d'au moins un champ magnétique (M) adapté pour générer des courants de Foucault (F) dans ledit élément magnétique (6) afin de dégivrer la bande de frottement (5).

2. Pantographe selon la revendication 1, dans lequel ledit dispositif de support (4) est constitué par ledit élément magnétique (6).

3. Pantographe selon la revendication 1, dans lequel, ledit dispositif de support (4) comportant un élément de support amagnétique (40) d'une bande de frottement (5), l'élément magnétique (6) est fixé audit élément de support (40).

4. Pantographe selon la revendication 3, dans lequel l'élément magnétique (6) est monté dans ledit élément de support (40).

5. Pantographe selon l'une des revendications 1 à 4, dans lequel ladite bande de frottement (5) est soudée audit dispositif de support (4) afin d'assurer un couplage thermique optimal.

6. Pantographe selon l'une des revendications 1 à 5, dans lequel les moyens de génération (8) d'au moins un champ magnétique (M) comportent au moins un module d'alimentation (81) et au moins un module bobiné (82).

7. Pantographe selon la revendication précédente, dans lequel les moyens de génération (8) d'au moins un champ magnétique (M) comportent un transformateur d'isolation (83) monté électriquement entre le module d'alimentation (81) et le module bobiné (82).

8. Pantographe selon la revendication précédente, dans lequel, le module bobiné (82) est monté sur l'archet (3) du pantographe (1).

9. Pantographe selon l'une des revendications 7 à 8, dans lequel, le pantographe (1) comportant au moins un dispositif d'isolation (7) adapté pour être fixé à un véhicule ferroviaire (100), le transformateur d'isolation (83) est monté dans ledit dispositif d'isolation (7).

10. Procédé de dégivrage d'un pantographe (1) comportant un cadre (2) monté à un véhicule ferroviaire (10) et un archet (3), monté sur ledit cadre (2), comportant au moins un dispositif de support (4) dans lequel est montée au moins une bande de frottement (5) adaptée pour capter un courant d'alimentation d'une ligne caténaire (120), le dispositif de support comportant au moins un élément magnétique (6), le procédé comportant une étape de génération d'au moins un champ magnétique (M) afin de générer des courants de Foucault (F) dans ledit élément magnétique (6) pour dégivrer la bande de frottement (5).

## Patentansprüche

1. Stromabnehmer (1), umfassend einen Rahmen (2), der dazu bestimmt ist, auf ein Schienenfahrzeug (10) montiert zu werden, sowie eine auf dem besagten Rahmen (2) montierte Stromabnehmerwippe (3), die mindestens eine Trägervorrichtung (4) enthält, in der mindestens ein Reibungsstreifen (5) montiert ist, der geeignet ist, den Strom aus einer Oberleitung zu übernehmen, wobei der Stromabnehmer **dadurch gekennzeichnet ist, dass** besagte Trägervorrichtung (4) mindestens ein Magnetelement (6) umfasst, und dadurch, dass der Stromabnehmer (1) Mittel zur Erzeugung (8) von mindestens einem Magnetfeld (M) umfasst, das geeignet ist, in dem besagten Magnetelement (6) Wirbelströme (F) zu erzeugen, um den Reibungsstreifen (5) zu enteisen.

2. Stromabnehmer gemäß Anspruch 1, in dem die besagte Trägervorrichtung (4) durch das besagte Magnetelement (6) gebildet ist.

3. Stromabnehmer gemäß Anspruch 1, in dem die besagte Trägervorrichtung (4) ein unmagnetisches Trägerelement (40) eines Reibungsstreifens (5) umfasst, wobei das Magnetelement (6) auf dem besagten Trägerelement (40) befestigt ist.

4. Stromabnehmer gemäß Anspruch 3, in dem das besagte Magnetelement (6) im besagten Trägerelement (40) montiert ist.

5. Stromabnehmer gemäß einem der Ansprüche 1 bis 4, in dem der besagte Reibungsstreifen (5) an die besagte Trägervorrichtung (4) geschweißt ist, um eine optimale thermische Kopplung zu erzielen.

6. Stromabnehmer gemäß einem der Ansprüche 1 bis 5, in dem die Mittel zur Erzeugung (8) von mindestens einem Magnetfeld (M) mindestens ein Netzteilmodul (81) und mindestens ein gewickeltes Modul (82) umfassen.

7. Stromabnehmer gemäß dem vorstehenden Anspruch, in dem die Mittel zur Erzeugung (8) von mindestens einem Magnetfeld (M) mindestens einen Trenntransformator (83) umfassen, der elektrisch zwischen dem Netzteilmodul (81) und dem gewickelten Modul (82) montiert ist.

8. Stromabnehmer gemäß dem vorstehenden Anspruch, in dem das gewickelte Modul (82) auf der Stromabnehmerwippe (3) des Stromabnehmers (1) montiert ist.

9. Stromabnehmer gemäß einem der Ansprüche 7 bis 8, wobei der Stromabnehmer (1) mindestens eine Isoliervorrichtung (7) umfasst, die geeignet ist, auf einem Schienenfahrzeug (100) befestigt zu werden, und wobei der Trenntransformator (83) in der besagten Isoliervorrichtung (7) montiert ist.

10. Verfahren zum Enteisen eines Stromabnehmers (1) umfassend einen auf ein Schienenfahrzeug (10) montierten Rahmen (2), und eine auf dem besagten Rahmen (2) montierte Stromabnehmerwippe (3), enthaltend mindestens eine Trägervorrichtung (4), in der mindestens ein Reibungsstreifen (5) montiert ist, der geeignet ist, den Strom aus einer Oberleitung (120) zu übernehmen, wobei die Trägervorrichtung mindestens ein Magnetelement (6) umfasst, und wobei das Verfahren eine Etappe der Erzeugung von mindestens einem Magnetfeld (M) umfasst, das geeignet ist, in dem besagten Magnetelement (6) Wirbelströme (F) zu erzeugen, um den Reibungsstreifen (5) zu enteisen.

## Claims

1. Pantograph (1) comprising a frame (2), intended to be mounted on a railway vehicle (10), and a bow (3) mounted on said frame (2), comprising at least one support device (4) wherein at least one rubbing strip (5) is mounted, suitable for capturing a supply current from a catenary line, a pantograph **characterised by** the fact that said support device (4) comprises at least one magnetic element (6) and by the fact that the pantograph (1) comprises means (8) for generating at least one magnetic field (M) suitable for generating eddy currents (F) in said magnetic element (6) in order to de-ice the rubbing strip (5).

2. Pantograph according to claim 1, wherein said support device (4) is formed by said magnetic element (6).

3. Pantograph according to claim 1, wherein, said support device (4) comprising a non-magnetic element (40) supporting a rubbing strip (5), the magnetic element (6) is fixed to said support element (40).

4. Pantograph according to claim 3, wherein the magnetic element (6) is mounted in said support element (40).

5. Pantograph according to one of claims 1 to 4, wherein said rubbing strip (5) is welded to said support device (4) in order to provide optimum thermal coupling.

6. Pantograph according to one of claims 1 to 5, wherein the means (8) for generating at least one magnetic field (M) comprise at least one supply module (81) and at least one wound module (82).

7. Pantograph according to the preceding claim, wherein the means (8) for generating at least one magnetic field (M) comprise an isolating transformer (83) connected electrically between the supply module (81) and the wound module (82).

8. Pantograph according to the preceding claim, wherein the wound module (82) is mounted on the bow (3) of the pantograph (1).

9. Pantograph according to one of claims 7 to 8, wherein, the pantograph (1) comprising at least one isolation device (7) suitable for being fixed to a railway vehicle (100), the isolating transformer (83) is mounted in said isolation device (7).

10. Method for de-icing a pantograph (1), comprising a frame (2) mounted on a railway vehicle (10) and a bow (3) mounted on said frame (2), comprising at least one support device (4) wherein at least one rubbing strip (5) is mounted, suitable for capturing a supply current from a catenary line (120), the support device comprising at least one magnetic element (6), the method comprising a step of generating at least one magnetic field (M) in order to generate eddy currents (F) in said magnetic element (6) in order to de-ice the rubbing strip (5).
